(19) **Europäisches Patentamt European Patent Office Office européen des brevets**

(11) **EP 1 817 221 B1**

(12) **FASCICULE DE BREVET EUROPEEN**

(45) Date de publication et mention de la délivrance du brevet:
**20.06.2012 Bulletin 2012/25**

(51) Int Cl.:
*B62D 15/02* (2006.01)    *B62D 5/04* (2006.01)
*G01D 5/14* (2006.01)

(21) Numéro de dépôt: **05802590.9**

(22) Date de dépôt: **16.09.2005**

(86) Numéro de dépôt international:
**PCT/FR2005/002297**

(87) Numéro de publication internationale:
**WO 2006/045911 (04.05.2006 Gazette 2006/18)**

(54) **PROCEDE POUR LA DETERMINATION DE LA POSITION ANGULAIRE DU VOLANT DE CONDUITE D'UNE DIRECTION ASSISTEE ELECTRIQUE DE VEHICULE AUTOMOBILE**

VERFAHREN ZUR BESTIMMUNG DER WINKELPOSITION EINES ELEKTRISCH UNTERSTÜTZTEN LENKRADS EINES KRAFTFAHRZEUGS

METHOD FOR DETERMINING THE ANGLE POSITION OF AN ELECTRICALLY ASSISTED STEERING WHEEL OF A MOTOR VEHICLE

(84) Etats contractants désignés:
**CZ DE GB IT**

(30) Priorité: **25.10.2004 FR 0411355**

(43) Date de publication de la demande:
**15.08.2007 Bulletin 2007/33**

(73) Titulaire: **JTEKT Europe**
**69450 Irigny (FR)**

(72) Inventeurs:
• **BARTHOMEUF, Julien**
  **F-69230 SAINT GENIS LAVAL (FR)**
• **CASSAR, Stéphane**
  **F-69004 LYON (FR)**
• **MICHELIS, André**
  **F-69520 GRIGNY (FR)**

(74) Mandataire: **Bratel, Gérard et al**
**Cabinet Germain & Maureau**
**12, rue Boileau**
**BP 6153**
**69466 Lyon Cedex 06 (FR)**

(56) Documents cités:
**EP-A- 1 026 068    EP-A- 1 362 766**
**FR-A- 2 769 088    FR-A- 2 790 094**
**FR-A- 2 830 140    FR-A- 2 848 974**

**EP 1 817 221 B1**

**Description**

La présente invention concerne, de façon générale, les véhicules automobiles équipés d'une direction assistée électrique. Plus particulièrement, cette invention s'intéresse à un procédé pour la détermination de la position angulaire du volant de conduite d'une direction assistée électrique de véhicule automobile.

De manière généralement connue, une direction assistée électrique de véhicule automobile comprend un moteur électrique d'assistance, à deux sens de rotation, dont l'arbre de sortie est habituellement accouplé, par l'intermédiaire d'un réducteur de vitesse par exemple à vis sans fin et roue tangente, à la colonne de direction du véhicule, de manière à transmettre un couple moteur (éventuellement aussi un couple résistant) à cette colonne de direction. Le couple d'assistance est lui-même communiqué, par l'intermédiaire de la partie mécanique de la direction généralement du type à pignon et crémaillère, aux deux roues directrices du véhicule concerné, de manière à les orienter en vue d'un braquage à droite ou à gauche, ou d'un redressement. On connaît aussi des directions assistées électriques avec système d'assistance agissant sur la crémaillère ; dans de tels systèmes, le moteur électrique d'assistance est accouplé, par exemple, à un réducteur du type vis à billes qui transmet l'effort d'assistance directement à la crémaillère.

Le moteur électrique d'assistance est piloté par un calculateur électronique embarqué, qui reçoit divers signaux d'entrée et qui les traite, de manière à commander de manière optimisée, à chaque instant, le moteur électrique d'assistance. Les grandeurs d'entrée ainsi exploitées dans le calculateur, pour la régulation de la direction assistée électrique, sont en particulier la position angulaire instantanée du volant de conduite du véhicule, et/ou du moteur électrique d'assistance, le couple exercé par le conducteur sur le volant, et la vitesse instantanée du véhicule. Le calculateur peut aussi exploiter d'autres paramètres, déduits par un calcul, par exemple la vitesse de rotation du volant obtenue en tant que dérivée, par rapport au temps, de l'angle du volant.

Plus particulièrement, la mesure de la position angulaire instantanée du volant est habituellement réalisée par un capteur de position angulaire du volant qui reste complexe à mettre en oeuvre et à étalonner, ce capteur étant en général disposé sur la colonne de direction. L'information fournie par un tel capteur est traitée par le calculateur embarqué, pour la fonction de retour automatique du volant, pour les algorithmes de régulation de l'assistance, ainsi que pour être transmise à l'équipement ESP (dispositif électronique de stabilité programmé) en charge de la stabilité générale du véhicule. Ce dernier détermine, en fonction des accélérations longitudinales et transversales du véhicule et de la position du volant, si un risque de dérapage existe et si des freinages roue par roue sont ou non nécessaires.

L'information fournie par ce capteur de position doit être d'une grande précision et être disponible dès l'initialisation de l'électronique de la direction assistée électrique, au démarrage du véhicule. En outre, le volant doit pouvoir être tourné d'un angle important lorsque l'allumage est coupé.

Pour répondre à ces exigences, on utilise en particulier un capteur de position avec "zéro" absolu, ce qui entraîne un surcoût important de la direction.

Une autre possibilité, divulguée dans le document de brevet FR 2848974 A, consiste à effectuer la détermination de la position angulaire du volant à partir de données relatives à la position angulaire du rotor du moteur électrique d'assistance et en tenant compte du rapport de réduction entre le moteur électrique d'assistance et la colonne de direction. Toutefois dans le cas de ce document le procédé consite à calculer une erreur de position angulaire du volant en fonction de la position angulaire du moteur d'assistance, et à corriger périodiquement, de cette erreur, une valeur de position angulaire absolue du volant, si bien qu'il s'agit d'un procédé de correction ou de compensation. De plus, ce procédé implique de conserver, dans une mémoire non volatile, une valeur de position angulaire absolue du volant entre la mise en veille et l'initialisation du calculateur du système d'assistance.

La présente invention vise principalement à supprimer un tel capteur complexe de position angulaire du volant, tout en disposant d'une information représentative de la position angulaire du volant, de manière à simplifier fortement la réalisation de la colonne de direction pour une direction assistée électrique.

A cet effet, l'invention a pour objet un procédé pour la détermination de la position angulaire du volant de conduite d'une direction assistée électrique de véhicule automobile, la direction comprenant un moteur électrique d'assistance piloté par un calculateur électronique embarqué, la détermination de la position angulaire du volant étant effectuée à partir de données relatives à la position angulaire du rotor du moteur électrique d'assistance et en tenant compte du rapport de réduction entre le moteur électrique d'assistance et la colonne de direction le moteur électrique d'assistance comportant une pluralité (n) de pôles statoriques répartis sur sa circonférence et une mesure de la position angulaire instantanée entre deux pôles successifs du moteur électrique d'assistance étant réalisée par un capteur, notamment du type resolveur ou à effet Hall, le procédé consistant à

- déterminer dans quel secteur actuel (*tr_moteur*), un secteur du moteur d'assistance étant délimité par deux pôles successifs, se trouve le moteur d'assistance, le passage d'un secteur à un autre, respectivement précédent ou suivant, étant identifié lorsque l'écart entre deux mesures du capteur de la position angulaire instantanée du moteur d'assistance, est, respectivement, inférieur à une première valeur prédéterminée ou supérieur à une seconde valeur prédéterminée.

- déterminer une position angulaire relative (*Angle_vol_rel*) du volant, par rapport au moteur d'assistance, en fonction d'un rapport de réduction entre le moteur d'assistance et la cotonne de direction, et d'une position angulaire instantanée ($\theta_0$) de référence du moteur d'assistance dans un secteur, en particulier par la formule

$$Angle\_vol\_rel = \frac{1}{rapport\_reduction} \times (\frac{tr\_moteur}{n} \times 360 + (\theta - \theta_0)) \; ;$$

- identifer un secteur (*tr_moteur_neutre*), dit neutre, dans lequel se trouve le moteur d'assistance lorsque les vitesses de rotation des roues arrière droite et gauche du véhicule sont égales ;
- déterminer un décalage angulaire (*Angle_Decalage*) du volant correspondant à une position angulaire neutre du volant, en fonction du secteur actuel, du secteur neutre, et du rapport de réduction entre le moteur d'assistance et la colonne de direction, en particulier par la formule :

$$Angle\_Decalage = \frac{360}{n} \times \frac{(tr\_moteur - tr\_moteur\_neutre)}{rapport\_reduction} \; ;$$

- déterminer une position angulaire absolue du volant, laquelle est égale à la différence entre la position angulaire relative du volant et son décalage angulaire.

Ainsi, l'idée inventive consiste à réaliser à chaque instant une estimation suffisamment précise et exploitable de la position angulaire du volant, en déterminant la valeur de cette position angulaire non plus par un capteur dédié, tel que celui placé actuellement sur la colonne de direction, mais par une estimation faite à partir d'autres informations relatives à la position du rotor du moteur électrique d'assistance et fournies par un capteur associé au moteur électrique d'assistance. Ces informations sont fiables et précises, ce qui permet de connaître exactement l'évolution de la position angulaire du volant dans le temps et dès l'initialisation.

Une estimation dite mécanique (*tr_moteur_neutre_roues*) du secteur neutre est avantageusement réalisée, proportionnelle à la différence entre un angle de braquage au niveau du volant et la position angulaire relative du volant, en particulier par la formule :

$$tr\_moteur\_neutre\_roues = \frac{\alpha \, roues - angle\_vol\_rel}{(360/n)}$$

l'angle de braquage ($\alpha$ *roues*) au niveau du volant étant déterminé par calcul en fonction de la vitesse du véhicule (v), de l'empattement du véhicule (L), du gradient de sous-virage (K), de la démultiplication (D) de la direction, et du rayon de braquage (R), en particulier par la formule :

$$\alpha \, roues = D\left(\frac{L}{R} + K\frac{v^2}{R}\right) .$$

Le rayon de braquage (R) est par exemple déterminé par calcul en fonction des vitesses de rotation des roues arrière droite (*v arr D*) et gauche (*v arr G*) du véhicule, en particulier par la formule :

$$R = \frac{Base\_Arriere}{2} \times \frac{v\,arr\,D + v\,arr\,G}{|v\,arrD - v\,arrG|}$$

où *Base_Arriere* désigne une constante prédéterminée.

Une estimation statistique du secteur neutre est avantageusement réalisée en déterminant, chaque fois que les vitesses de rotation des roues arrière droite et gauche du véhicule sont égales, le nombre d'occurrences du moteur d'assistance dans chaque secteur, le secteur neutre étant le secteur ayant le plus grand nombre d'occurrences du moteur d'assistance.

L'estimation statistique du secteur neutre peut être validée si le nombre d'occurrences du moteur d'assistance dans ce secteur est supérieur à au moins un seuil prédéterminé.

De manière avantageuse, dans un souci de fiabilité du procédé, l'identification du secteur neutre est validée lorsque les estimations statistique et mécanique renvoient la même valeur.

L'invention sera de toute façon mieux comprise à l'aide de la description qui suit, en référence au dessin schématique annexé illustrant, à titre d'exemple, un mode de mise en oeuvre de ce procédé:

Figure 1 est une vue en perspective, schématisée, d'une direction assistée électrique de l'état de la technique ;

Figure 2 est un schéma de principe illustrant les étapes du procédé de l'invention ;

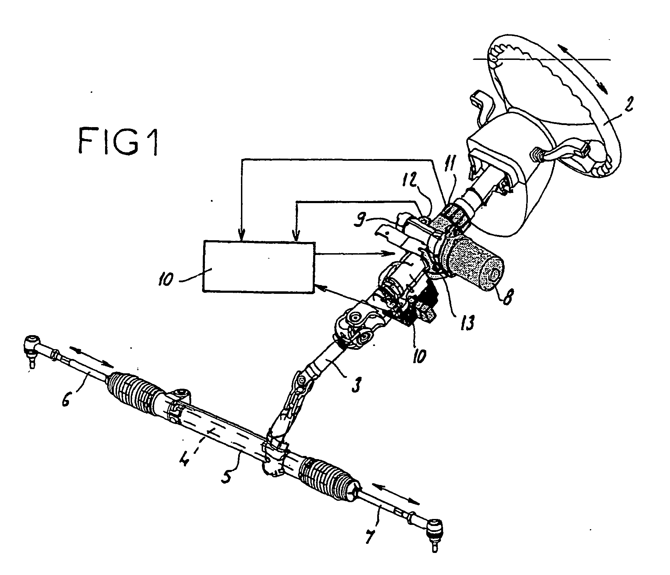

La figure 1 rappelle quels sont les principaux éléments composant un système de direction assistée électrique.

Une telle direction comprend, d'une part, une partie mécanique désignée globalement par le repère 1, comprenant un volant de conduite 2 lié à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule automobile concerné.

La direction comprend, pour assister l'effort manuel exercé par le conducteur du véhicule sur le volant 2, un moteur électrique d'assistance 8 à deux sens de rotation, dont l'arbre de sortie est accouplé, par l'intermédiaire d'un réducteur de vitesse 9 notamment à vis sans fin et roue tangente, à la colonne de direction 3, de manière à transmettre un couple moteur (éventuellement aussi un couple résistant) à cette colonne de direction 3.

Le moteur électrique d'assistance 8 est piloté par un calculateur électronique embarqué 10, qui reçoit et traite divers signaux, en provenance de capteurs. Dans une réalisation classique, le calculateur électronique 10 reçoit un signal électrique issu d'un capteur 11 de l'angle du volant 2, représentatif de l'angle instantané de braquage du véhicule automobile concerné, et ce calculateur 10 reçoit aussi un signal issu d'un capteur de couple 12 placé sur la colonne de direction 3, et mesurant ainsi le couple exercé par le conducteur sur le volant 2.

Dans l'exemple illustré, il est encore prévu un résolveur 13 pour détecter la position angulaire absolue θ du moteur électrique d'assistance 8 entre deux pôles successifs parmi les n pôles statoriques du moteur d'assistance 8, avec

$$0 < \theta < \frac{360}{n}.$$

A partir de ces diverses informations, et éventuellement de paramètres extérieurs à la direction tels que la vitesse du véhicule, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

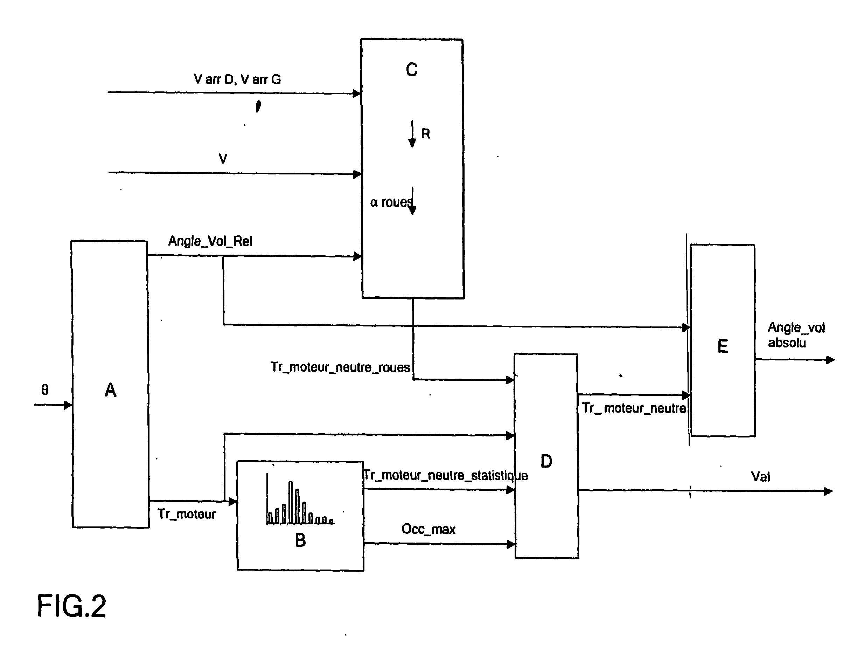

Par rapport à l'état de la technique illustré par la figure 1, la présente invention permet de supprimer le capteur 11 de l'angle du volant 2, en le remplaçant par une estimation réalisée dans le calculateur électronique embarqué 10, conformément à l'algorithme représenté en figure 2.

Cet algorithme peut être décomposé en cinq blocs A, B, C, D, et E.

Le plan de coupe transversale du moteur d'assistance 8 étant subdivisé en n secteurs chacun délimité par deux pôles statoriques successifs, un bloc A détermine dans lequel de ces n secteurs se trouve le moteur d'assistance 8, respectivement, en décrémentant ou en incrémentant d'une unité, une variable *tr_moteur,* correspondant au secteur actuel, lorsque l'écart entre deux échantillons de mesure du resolveur 13 est, respectivement, inférieur à une première valeur prédéterminée ou supérieur à une seconde valeur prédéterminée.

A partir d'un rapport de réduction *rapport_reduction* entre le moteur d'assistance 8 et la colonne de direction 3, et d'une constante $\theta_0$ prédéterminée désignant une position instantanée de référence du moteur d'assistance 8 entre deux pôles successifs, le bloc A détermine également une position angulaire relative *Angle_vol_rel* du volant 2, par rapport à la position angulaire du moteur d'assistance 8, par la formule :

$$Angle\_vol\_rel = \frac{1}{rapport\_reduction} \times (\frac{tr\_moteur}{n} \times 360 + (\theta - \theta_0)).$$

Un bloc B réalise une estimation du nombre d'occurrences du moteur d'assistance 8 dans chacun des secteurs, chaque fois que les vitesses de rotation des roues arrière droite et gauche du véhicule sont égales, le secteur ayant le plus grand nombre d'occurrences étant identifié comme secteur neutre statistique *tr_moteur_neutre_statistique.*

Si un même secteur est observé durant une période d'observation prédéterminée, le nombre d'occurrences de ce secteur est incrémenté d'une unité.

Les nombres d'occurrences des dix secteurs les plus observés sont stockés dans un tableau, dont les règles de mise à jour sont les suivantes.

Si un secteur observé est déjà dans le tableau alors on incrémente son nombre d'occurrences d'une unité. Si un secteur observé n'est pas dans le tableau, mais que son nombre d'occurrences est supérieur à celui du dernier secteur du tableau, dont le nombre d'occurrences est le plus faible dans le tableau, alors ledit dernier secteur est effacé du tableau et remplacé par le secteur observé.

Le secteur neutre statistique *tr_moteur_neutre_statistique* correspond au secteur ayant le nombre d'occurrences *Occ_max* le plus élevé du tableau.

Parallèlement à cette estimation statistique, un calcul d'un angle de braquage $\alpha$ *roues* au niveau du volant est réalisé, au moyen d'un modèle mécanique, par la formule

$$\alpha \, roues = D\left(\frac{L}{R} + K\,\frac{v^2}{R}\right)$$

où D désigne la démultiplication, L l'empattement du véhicule, v la vitesse du véhicule, L le gradient de sous-virage, et R le rayon de braquage.

Le rayon de braquage R est déterminé par la formule :

$$R = \frac{Base\_Arriere}{2} \times \frac{v\,arr\,D + v\,arr\,G}{|v\,arrD - v\,arrG|}$$

où *Base_Arriere* désigne une constante prédéterminée, *v arr D* la vitesse de la roue arrière droite, et *v arr G* la vitesse de la roue arrière gauche.

A partir de l'angle de braquage $\alpha$ *roues* ainsi calculé et de la position angulaire relative *Angle_vol_rel* du volant 2 calculée précédemment, un bloc C réalise une estimation dite "mécanique" du secteur neutre *tr_moteur_neutre_roues* par la formule :

$$tr\_moteur\_neutre\_roues = \frac{\alpha\,roues - angle\_vol\_rel}{(360/n)}.$$

Une table de décision D compare les estimations statistique et mécanique précédentes du secteur neutre.

Si *tr_moteur_neutre_statistique* = *tr_moteur_neutre_roues,* alors le secteur correspondant est identifié comme étant le secteur neutre, que l'on note *tr_moteur_neutre*.

La table de décision D renvoie alors un paramètre de validité *Val* sur la détermination du secteur neutre. Ce paramètre de validité *Val* peut prendre trois valeurs, 0, 1 ou 2, selon que le nombre d'occurrences *Occ_max* associé au secteur neutre *tr_moteur_neutre_statistique* est inférieur ou supérieur à un premier ou à un second seuils prédéterminés et paramétrables.

Lorsque le paramètre de validité *Val* prend par exemple

- la valeur 0, le procédé ne peut pas calculer de position angulaire absolue du volant ;
- la valeur 1, la position angulaire absolue du volant ne sera calculée par le procédé qu'avec une précision de $\pm 20°$ ;
- la valeur 2, la position angulaire absolue du volant sera calculée par le procédé avec une précision de $\pm\,4°$.

Enfin, un bloc E calcule un décalage angulaire *Angle_décalage* du volant 2 correspondant à une position angulaire neutre du volant 2, à partir du secteur neutre *tr_moteur_neutre* validé précédemment par la table de décision D, par la formule suivante:

$$Angle\_Decalage = \frac{360}{n} \times \frac{(tr\_moteur - tr\_moteur\_neutre)}{rapport\_reduction}.$$

Une position angulaire absolue *Angle_vol_absolu* du volant 2 est ensuite calculée par le bloc E, par la formule suivante:

$$Angle\_vol\_absolu = Angle\_vol\_rel - Angle\_Decalage \, .$$

La position angulaire absolue *Angle_vol_absolu* du volant 2 pouvant être utilisée par des fonctions actives qui pilotent l'assistance du volant, des fonctions de surveillance sont avantageusement prévues afin que la variable *Angle_vol_absolu* et, le cas échéant, le paramètre de validité *Val* soient réinitialisés à zéro en cas de défaillance logique (division par zéro, débordement en mémoire, etc...) dans les fonctions de calculs intermédiaires, ou en cas de défaut physique au niveau du signal du resolveur 13.

En outre, en cas de perte de données, notamment relatives aux vitesses des roues arrière, fournies par un réseau de multiplexage CAN du véhicule, la table de décision D arrête son calcul.

Si le paramètre de validité *Val* est égal à 1 ou 2, alors la table de décision D reste à son état, le secteur neutre *tr_moteur_neutre* mémorisé est conservé tant que le défaut n'a pas disparu.

La gestion de la position angulaire du volant par l'intermédiaire du resolveur 13 ou d'un capteur à effet hall de la position du moteur 8 permet d'obtenir une grande précision dans la détermination de la position angulaire du volant, ce qui améliore les algorithmes de l'assistance électrique et de l'équipement EPS.

Comme il va de soi, l'invention ne se limite pas au seul mode de mise en oeuvre qui a été décrit ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention en recourant à un autre type de capteur de la position angulaire instantanée du moteur d'assistance entre deux pôles successifs, tel qu'un capteur à effet Hall, ou quels que soient le détail de l'algorithme mis en oeuvre, les particularités de la direction assistée électrique concernée, etc.

**Revendications**

1.  Procédé pour la détermination de la position angulaire du volant de conduite (2) d'une direction assistée électrique de véhicule automobile, la direction comprenant un moteur électrique d'assistance (8) piloté par un calculateur électronique embarqué (10), la détermination de la position angulaire du volant (2) étant effectuée à partir de données relatives à la position angulaire du rotor du moteur électrique d'assistance (8) et en tenant compte du rapport de réduction entre le moteur électrique d'assistance (8) et la colonne de direction (3), le moteur électrique d'assistance (8) comportant une pluralité (n) de pôles statoriques répartis sur sa circonférence et une mesure de la position angulaire instantanée (θ) entre deux pôles successifs du moteur électrique d'assistance (8) étant réalisée par un capteur, notamment du type resolveur (13) ou à effet Hall, caractérisé en ce qu'il consiste à

    - déterminer dans quel secteur actuel *(tr_moteur),* un secteur du moteur d'assistance (8) étant délimité par deux pôles successifs, se trouve le moteur d'assistance (8), le passage d'un secteur à un autre, respectivement précédent ou suivant, étant identifié lorsque l'écart entre deux mesures du capteur (13) de la position angulaire instantanée *(θ)* du moteur d'assistance (8) est, respectivement, inférieur à une première valeur prédéterminée ou supérieur à une seconde valeur prédéterminée ;
    - déterminer une position angulaire relative *(Angle_vol_rel)* du volant (2), par rapport au moteur d'assistance (8), en fonction d'un rapport de réduction *(rapport_réduction)* entre le moteur d'assistance (8) et la colonne de direction (3), et d'une position angulaire instantanée de référence (θo) du moteur d'assistance (8) dans un secteur, en particulier par la formule

    $$Angle\_vol\_rel = \frac{1}{rapport\_reduction} \times (\frac{tr\_moteur}{n} \times 360 + (\theta - \theta_0)) \ ;$$

    - identifier un secteur, dit neutre *(tr moteur neutre),* dans lequel se trouve le moteur d'assistance (8) lorsque les vitesses de rotation des roues arrière droite *(v arr D)* et gauche *(v arr G)* du véhicule sont égales ;
    - déterminer un décalage angulaire *(Angle_décalage)* du volant (2) correspondant à une position angulaire neutre du volant, en fonction du secteur actuel *(tr_moteur),* du secteur neutre *(tr_moteur_neutre),* et du rapport de réduction *(rapport_réduction)* entre le moteur d'assistance (8) et la colonne de direction (3), en particulier par la formule :

$$Angle\_Decalage = \frac{360}{n} \times \frac{(tr\_moteur - tr\_moteur\_neutre)}{rapport\_reduction} \; ;$$

- déterminer une position angulaire absolue *(Angle_vol_absolu)* du volant (2), laquelle est égale à la différence entre la position angulaire relative *(Angle_vol_rel)* du volant (2) et son décalage angulaire *(Angle_décalage)*.

**2.** Procédé selon la revendication 1, **caractérisé en ce qu'**est réalisée une estimation dite mécanique *(tr_moteur_neutre_roues)* du secteur neutre, proportionnelle à la différence entre un angle de braquage *(α roues)* au niveau du volant (2) et la position angulaire relative *(Angle_vol_rel)* du volant (2), en particulier par la formule :

$$tr\_moteur\_neutre\_roues = \frac{\alpha\,roues - angle\_vol\_rel}{(360/n)}$$

l'angle de braquage *(α roues)* au niveau du volant (2) étant déterminé par calcul en fonction de la vitesse du véhicule (v), de l'empattement du véhicule (L), du gradient de sous-virage (K), de la démultiplication (D) de la direction, et du rayon de braquage (R), en particulier par la formule :

$$\alpha\,roues = D\left(\frac{L}{R} + K\,\frac{v^2}{R}\right).$$

**3.** Procédé selon la revendication 2, **caractérisé en ce que** le rayon de braquage R est déterminé par calcul en fonction des vitesses de rotation des roues arrière droite *(v arr D)* et gauche (*v arr G*) du véhicule, en particulier par la formule :

$$R = \frac{Base\_Arriere}{2} \times \frac{v\,arr\,D + v\,arr\,G}{|v\,arrD - v\,arrG|}$$

où *Base_Arriere* désigne une constante prédéterminée.

**4.** Procédé selon l'une des revendications 1 à 3, **caractérisé en ce qu'**est réalisée une estimation statistique (*tr_moteur_neutre_statistique*) du secteur neutre en déterminant, chaque fois que les vitesses de rotation des roues arrière droite (*v arr D*) et gauche (*v arr G*) du véhicule sont égales, le nombre d'occurrences du moteur d'assistance (8) dans chaque secteur, le secteur neutre (*tr_moteur_neutre_statistique*) étant le secteur ayant le plus grand nombre d'occurrences (*Occ_max*) du moteur d'assistance (8).

**5.** Procédé selon la revendication 4, **caractérisé en ce que** l'estimation statistique du secteur neutre (*tr_moteur_neutre_statistique*) est validée si le nombre d'occurrences (*Occ_max*) du moteur d'assistance (8) dans ce secteur est supérieur à au moins un seuil prédéterminé.

**6.** Procédé selon la revendication 2 ou 3 et selon la revendication 4 ou 5, **caractérisé en ce que** l'identification du secteur neutre est validée lorsque les estimations statistique (*tr_moteur_neutre_statistique*) et mécanique (*tr_moteur_neutre_roues*) renvoient la même valeur (*tr_moteur_neutre*).

**Claims**

**1.** A method for determining the angular position of the steering wheel (2) of an automobile vehicle electric power-assisted steering system, the steering system comprising an assistance electric motor (8) controlled by an on-board electronic processor (10), the determining of the angular position of the steering wheel (2) being carried out from data relating to the angular position of the motor of the assistance electric motor (8) and taking into account the reduction ratio between the assistance electric motor (8) and the steering column, the assistance electric motor (8) comprising a plurality (n) of stator poles distributed around its circumference and a measurement of the instantaneous angular position (θ) between two successive poles of the assistance electric motor (8) being carried out by a sensor, notably of the resolver type (13) or using the Hall effect, **characterized in that** it consists in

- determiningin which current sector *(tr_motor),* a sector of the assistance motor (8) being bounded by two successive poles, the assistance motor (8) is situated, the passage from one sector to another, preceding or following respectively, being identified when the separation between two measurements from the sensor (13) of the instantaneous angular position (θ) of the assistance motor (8) is, respectively, less than a first predetermined value or greater than a second predetermined value;
- determining a relative angular position *(Angle_steer_rel)* of the steering wheel (2), with respect to the assistance motor (8), as a function of a reduction ratio *(reduction ratio)* between the assistance motor (8) and the steering column (3), and of a reference instantaneous angular position ($\theta_0$) of the assistance motor (8) within one sector, in particular by the formula:

$$Angle\_steer\_rel = \frac{1}{Reduction\_ratio} \times \left[ \frac{tr\_motor}{n} \times 360 + (\Theta - \Theta_0) \right];$$

- identifying a sector, referred to as neutral sector *(tr_motor_neutral),* in which the assistance motor (8) is situated when the rotation speeds of the right-hand rear wheel *(v rear R)* and left-hand rear wheel *(v rear L)* of the vehicle are equal;
- determining an angular offset (*Angle_offset*) of the steering wheel (2), corresponding to a neutral angular position of the steering wheel, as a function of the current sector (*tr_motor*), of the neutral sector (*tr_motor_neutral),* and of the reduction ratio (reduction ratio) between the assistance motor (8) and the steering column (3), in particular by the formula:

$$Angle\ Offset = \frac{360}{n} \times \left[ \frac{tr\_motor - tr\_motor\_neutral}{reduction\_ratio} \right];$$

- determining an absolute angular position (*Angle steer absolute*) of the steering wheel (2), which is equal to the difference between the relative angular position (*Angle_steer_rel*) of the steering wheel (2) and its angular offset (*Angle_offset*).

2. The method as claimed in claim 1, **characterized in that** an estimation, referred to as mechanical estimation (*tr_motor_neutral_wheels*), of the neutral sector, proportional to the difference between a turning angle (α *wheels*) at the steering wheel (2) and the relative angular position (*Angle_steer_rel)* of the steering wheel (2), is carried out, in particular by the formula:

$$tr\_motor\_neutral\_wheels = \frac{A wheels\_angle\_steer\_rel}{(360/n)}$$

the turning angle (α *wheels)* at the steering wheel (2) being determined by calculation as a function of the speed of the vehicle (v), of the wheel-base of the vehicle (L), of the under-steer gradient (K), of the demultiplication (D) of the steering system, and of the turning radius (R), in particular by the formula:

$$\alpha_{wheels} = D \left[ \frac{L}{R} + K \frac{V^2}{R} \right]$$

**3.** The method as claimed in claim 2, **characterized in that** the turning radius (R) is determined by calculation as a function of the rotation speeds of the right-hand rear wheel *(v rear R)* and left-hand rear wheel *(v rear L)* of the vehicle, in particular by the formula:

$$R = \frac{Base\_Rear}{2} \ X \ \frac{vrearR + vrearL}{|vrearR - vrearL|}$$

where *Base_Rear* denotes a predetermined constant.

**4.** The method as claimed in one of claims 1 to 3, **characterized in that** a statistical estimation *(tr_motor_neutral_statistical)* of the neutral sector is carried out by determining, whenever the rotation speeds of the right-hand rear wheel *(v rear R)* and left-hand rear wheel *(v rear L)* of the vehicle are equal, the number of occurrences of the assistance motor (8) within each sector, the neutral sector *(tr_motor_neutral_statistical)* being the sector with the greatest number of occurrences *(Occ_max)* of the assistance motor (8).

**5.** The method as claimed in claim 4, **characterized in that** the statistical estimation of the neutral sector *(tr_motor_neutral_statistical)* is validated if the number of occurrences *(Occ_max)* of the assistance motor (8) within this sector is greater than at least one predetermined threshold.

**6.** The method as claimed in either of claims 2 and 3 and as claimed in either of claims 4 and 5, **characterized in that** the identification of the neutral sector is validated when the statistical estimation *(tr_motor_neutral_statistical)* and mechanical estimation *(tr_motor_neutral_wheels)* return the same value *(tr_motor_neutral)*.

**Patentansprüche**

**1.** Verfahren zur Bestimmung der Winkelposition des Lenkrad (2) einer elektrisch unterstützten Lenkung eines Kraftfahrzeugs, wobei die Lenkung einen elektrischen Hilfsmotor (8) umfasst, der von einem eingebauten elektronischen Rechner (10) gesteuert wird, wobei die Bestimmung der Winkelposition des Lenkrads (2) ausgehend von Daten durchgeführt wird, die sich auf die Winkelposition des elektrischen Hilfsmotors (8) beziehen und unter Berücksichtigung des Übersetzungsverhältnisses zwischen dem Hilfsmotor (8) und der Lenksäule (3), wobei der elektrische Hilfsmotor (8) eine Vielzahl (n) von Statorpolen aufweist, die auf seinem Umfang verteilt sind, und eine Messung der momentanen Winkelposition ($\theta$) zwischen zwei aufeinanderfolgenden Polen des elektrischen Hilfsmotors (8) von einem Sensor durchgeführt wird, vor allem vom Typ Resolver (13) oder mit Hall-Effekt, **dadurch gekennzeichnet, dass** es darin besteht:

- zu bestimmen, in welchem aktuellen Sektor (*tr_moteur*), wobei ein Sektor des Hilfsmotors (8) von zwei aufeinanderfolgenden Polen begrenzt wird, sich der Hilfsmotor (8) befindet, wobei der Übergang von einem Sektor zum anderen, jeweils vorherigen oder folgenden, identifiziert wird, wenn die Differenz zwischen zwei Messungen des Sensors (13) der momentanen Winkelposition ($\theta$) des Hilfsmotors (8) jeweils kleiner als ein erster vorbestimmter Wert oder größer als ein zweiter vorbestimmter Wert ist,
- eine relative Winkelposition (*Angle_vol_rel*) des Lenkrads (2) im Verhältnis zum Hilfsmotor (8) in Abhängigkeit eines Übersetzungsverhältnisses (*rapport_reduction*) zwischen dem Hilfsmotor (8) und der Lenksäule (3) und einer momentanen Referenz-Winkelposition ($\Theta_o$) des Hilfsmotors (8) in einem Sektor zu bestimmen, insbesondere mit der Formel

$$Angle\_vol\_rel = \frac{1}{rapport\_reduction} x(\frac{tr\_moteur}{n} x360 + (\theta - \theta_0))$$

- einen sogenannten neutralen Sektor (*tr moteur neutre*) zu identifizieren, in dem sich der Hilfsmotor (8) befindet, wenn die Rotationsgeschwindigkeiten der Hinterräder rechts (*v arr D*) und links (*v arr G*) des Fahrzeugs gleich sind,
- einen Winkelversatz (*Angle_décalage*) des Lenkrads (2), der einer neutralen Winkelposition des Lenkrads entspricht, in Abhängigkeit des aktuellen Sektors *(tr_moteur),* des neutralen Sektors *(tr_moteur_neutre)* und des Übersetzungsverhältnisses *(rapport_réduction)* zwischen dem Hilfsmotor (8) und der Lenksäule (3) zu bestimmen, insbesondere mit der Formel:

$$Angle\_Decalage = \frac{360}{n} x(\frac{tr\_moteur - tr\_moteur\_neutre)}{rapport\_reduction}$$

- eine absolute Winkelposition *(Angle_vol_absolu)* des Lenkrads (2) zu bestimmen, die gleich der Differenz zwischen der relativen Winkelposition *(Angle_vol_rel)* des Lenkrads (2) und seines Winkelversatzes *(Angle_ décalage)* ist.

**2.** Verfahren nach Anspruch 1, **dadurch gekennzeichnet, dass** eine sogenannte mechanische Schätzung *(tr_moteur_neutre_roues)* des neutralen Sektors proportional zur Differenz zwischen einem Lenkeinschlag (*α roues*) auf Ebene des Lenkrads (2) und der relativen Winkelposition *(Angle_vol_rel)* des Lenkrads (2) durchgeführt wird, insbesondere mit der Formel:

$$tr\_moteur\_neutre\_roues = \frac{\alpha roues - angle\_vol\_rel}{(360/n)}$$

wobei der Lenkeinschlag *(α roues)* auf Ebene des Lenkrads (2) durch Berechnung in Abhängigkeit von der Geschwindigkeit des Fahrzeugs (v), des Radstands des Fahrzeugs (L), des Untersteuerungsgradienten (K), der Übersetzung (D) der Lenkung und des Spurkreis-Radius (R) bestimmt wird, insbesondere mit der Formel:

$$\alpha\,roues = D\left(\frac{L}{R} + K\frac{v^1}{R}\right),$$

**3.** Verfahren nach Anspruch 2, **dadurch gekennzeichnet, dass** Spurkreis-Radius R durch Berechnung in Abhängigkeit von den Rotationsgeschwindigkeiten der Hinterräder rechts *(v arr D)* und links *(v arr G)* des Fahrzeugs bestimmt wird, insbesondere mit der Formel:

$$R = \frac{Base\_Arriere}{2} x\frac{v\,arr\,D + v\,arr\,G}{|v\,arr\,D - v\,arr\,G|}$$

wobei *Base_Arriere* eine vorbestimmte Konstante bezeichnet.

**4.** Verfahren nach einem der Ansprüche 1 bis 3, **dadurch gekennzeichnet, dass** eine statistische Schätzung *(tr_moteur_neutre_statistique)* des neutralen Sektors durchgeführt wird, indem jedes Mal, wenn die Rotationsgeschwindigkeiten der Hinterräder rechts *(v arr D)* und links *(v arr G)* des Fahrzeugs gleich sind, die Vorkommensanzahl des Hilfsmotors (8) in jedem Sektor bestimmt wird, wobei der neutrale Sektor *(tr_moteur_neutre_statistique)* der Sektor ist, der die größte Vorkommensanzahl *(Occ_max)* des Hilfsmotors (8) hat.

**5.** Verfahren nach Anspruch 4, **dadurch gekennzeichnet, dass** die statistische Schätzung des neutralen Sektors *(tr_moteur_neutre_statistique)* validiert wird, wenn die Vorkommensanzahl *(Occ_max)* des Hilfsmotors (8) in diesem Sektor größer als mindestens eine vorbestimmte Schwelle ist.

**6.** Verfahren nach Anspruch 2 oder 3 und nach Anspruch 4 oder 5, **dadurch gekennzeichnet, dass** die Identifizierung des neutralen Sektors validiert wird, wenn die statistischen *(tr_moteur_neutre_statistique)* und mechanischen *(tr_moteur_neutre_roues)* Schätzungen denselben Wert *(tr_moteur_neutre)* auswerfen.

FIG 1

FIG.2

**RÉFÉRENCES CITÉES DANS LA DESCRIPTION**

**Documents brevets cités dans la description**

- FR 2848974 A